# EUROPÄISCHE PATENTSCHRIFT

(11) **EP 3 251 627 B1**
(45) Veröffentlichungstag und Bekanntmachung des Hinweises auf die Patenterteilung: **02.05.2018**
(21) Anmeldenummer: 16172861.3
(22) Anmeldetag: 03.06.2016
(51) Int. Cl.: A61C 3/14, A61C 5/46

(54) **MEDIZINISCHES WERKZEUG ZUM ENTFERNEN VON ZAHNFRAGMENTEN**
MEDICAL TOOL FOR REMOVING TOOTH FRAGMENTS
OUTIL MEDICAL DESTINE A ELIMINER DES FRAGMENTS DENTAIRES

(43) Veröffentlichungstag der Anmeldung: 06.12.2017
(73) Patentinhaber: Ganß, Rainer, 29223 Celle (DE)
(72) Erfinder: Ulfat, Dania, 22047 Hamburg (DE)
(74) Vertreter: Patentanwälte Thömen & Körner

(56) Entgegenhaltungen:
- DE-U1-202005 007 267
- DE-U1-202005 020 213
- DE-U1-202006 001 276
- US-A1- 2007 218 423
- US-A1- 2015 037 755

## Beschreibung

Die Erfindung betrifft ein medizinisches Werkzeug zum Entfernen von Zahnfragmenten, insbesondere Zahnwurzeln und/oder Zahnwurzelresten, aus einem Zahnfach bzw. einer Alveole im Kieferbereich.

Bei der Zahnextraktion kann es passieren, insbesondere wenn ein bereits stark beschädigter Zahn gezogen werden soll, dass der zu ziehende Zahn ab- und/oder auseinanderbricht und Zahnfragmente, insbesondere Zahnwurzeln oder Zahnwurzelreste, im Zahnfach bzw. in der Alveole verbleiben. Um dieses Zahnfragment aus der Alveole zu entfernen muss heutzutage immer noch eine vergleichsweise aufwendige, mehrschrittige Operation mit Spezialinstrumenten durchgeführt werden. Je nach Größe und Stabilität des in der Alveole verbliebenen Zahnfragments sowie der Tiefe und der Ausgestaltung der Alveole, kann sich ein derartiger chirurgischer Eingriff als beliebig kompliziert erweisen.

Bei einer derartigen Extraktion eines Zahnfragments, insbesondere einer Zahnwurzel oder eines Zahnwurzelrests, sieht der Stand der Technik vor, mittels einer Wurzelfeile oder eines Wurzelbohrers den Wurzelkanal zu reinigen und zu vergrößern, um anschließend in den gereinigten und vergrößerten Wurzelkanal ein weiteres Werkzeug einzuführen, welches eine formschlüssige Verbindung zwischen dem Werkzeug und der Zahnwurzel herstellt.

In der DE 696 36 020 T2 werden eine Vielzahl von unterschiedlichen Ausgestaltungen einer Wurzelfeile oder eines Wurzelbohrers dargestellt, welche zum Reinigen und Vergrößern des Wurzelkanals eingesetzt werden können.

Darüber hinaus beschreibt die DE 199 31 734 A1 ein Werkzeug zum Entfernen von Zahnwurzeln bei dem eine hochelastische, steife Nadel zur Führung eines Extraktors in einen gereinigten und vergrößerten Wurzelkanal eingeführt wird und anschließend der Extraktor, welcher nach Art eines Gewindebohrers ausgebildet ist, durch Verdrehen des Extraktors in die Zahnwurzel eingedreht. Durch das Verbringen des Extraktors in die Zahnwurzel entsteht eine formschlüssige Verbindung zwischen der Zahnwurzel und dem Extraktor, wodurch ein Entfernen des Extraktors aus der Alveole einem Ziehen des Zahnwurzelrestes gleichkommt.

Die DE 197 08 870 C2 beschreibt ein Werkzeug zum Entfernen von Zahnwurzeln bei dem ein retentives Element, wobei das retentive Element als Widerhaken oder nach Art eines Gewindebohrers ausgebildet ist, in den gereinigten und vergrößerten Wurzelkanal oder eine in die Zahnwurzel eingebrachte Bohrung eingeführt wird. Aufgrund des retentiven Elements wird eine kraftschlüssige Verbindung zwischen dem Werkzeug und der Zahnwurzel hergestellt. Ein Entfernen des Werkzeugs führt somit zu einem Entfernen der Zahnwurzel aus der Alveole.

Nachteilig an dem zuvor genannten Stand der Technik ist, dass jeweils zunächst der Zahnwurzelkanal gereinigt und vergrößert werden muss oder eine separate Bohrung in den Zahnwurzelrest eingebracht werden muss. Je nach Größe des in der Alveole verbliebenen Zahnwurzelrestes bedeutet dies bereits einen komplizierten chirurgischen Eingriff, bei dem unter Umständen auch die Alveole aufgeschnitten und/oder vergrößert werden muss. Anschließend muss wenigstens ein zweites Werkzeug in den gereinigten und vergrößerten Wurzelkanal oder in die dafür eigens eingebrachte Bohrung eingeführt werden, welches mit dem Zahnwurzelrest eine kraftschlüssige Verbindung eingeht, um anschließend den Zahnwurzelrest zu entfernen.

Weiterhin aus dem Stand der Technik bekannten Nervnadeln sind lediglich geeignet Nervreste aus Zahnwurzelresten zu entfernen, jedoch nicht das gesamte Zahnfragment, insbesondere die Zahnwurzel oder den Zahnwurzelrest, als solches.

Derartige Verfahren nach dem Stand der Technik sind vergleichsweise zeitaufwendig und damit kostspielig. Darüber hinaus wird der Patient durch die langwierige Operation über einen vergleichsweise langen Zeitraum Schmerzen ausgesetzt. Des Weiteren hängen die Beschwerden nach dem erfolgten chirurgischen Eingriff, wie auch der Wundheilungsverlauf und die Gefahr von Wundinfektionen und Nachblutungen signifikant von der Invasivität des chirurgischen Eingriffs ab, weswegen ein minimalinvasiver chirurgischer Eingriff zu bevorzugen ist.
Die Druckschriften DE 20 2005 007 267 U1, DE 20 2005 020 213 U1 und DE 20 2006 001 276 U1 offenbaren Wurzelbohrer zur Entfernung stark zerstörter Zahnwurzelreste, die einen Bohrabschnitt nach Art eines Schraubengewindes aufweisen, der sich ohne Vorbohrung in den zu entfernenden Zahnwurzelrest einbringen lässt und über sein selbstschneidendes Gewinde eine formschlüssige Verbindung zwischen dem Bohrabschnitt und dem Zahnwurzelrest herstellt. Durch ein Entfernen des Wurzelbohrers kann aufgrund der formschlüssigen Verbindung zwischen dem Bohrabschnitt und dem Zahnwurzelrest die Zahnwurzel aus der Alveole entfernt werden.

Der vorliegenden Erfindung liegt somit die Aufgabe zugrunde, die genannten Probleme beim Entfernen von Zahnfragmenten, insbesondere Zahnwurzeln und/oder Zahnwurzelresten, aus einem Zahnfach bzw. einer Alveole im Kieferbereich zu beseitigen und insbesondere ein medizinisches Werkzeug bereitzustellen, das eine schnellere und kostengünstigere Extraktion von Zahnfragmenten, insbesondere Zahnwurzeln und/oder Zahnwurzelresten, ermöglicht und lediglich einen minimalinvasiven Eingriff erfordert.

Diese Aufgabe wird bei einem medizinischen Werkzeug durch die Merkmale des Anspruchs 1 gelöst. Weiterbildungen und vorteilhafte Ausgestaltungen ergeben sich aus den abhängigen Ansprüchen.

Das erfindungsgemäße medizinische Werkzeug zum Entfernen von Zahnfragmenten, insbesondere Zahnwurzeln und/oder Zahnwurzelresten, aus einem Zahnfach bzw. einer Alveole im Kieferbereich umfasst eine Basis sowie eine an der Basis angeordnete Nadel, wobei die Nadel einen retentiven Abschnitt und einen Bohrabschnitt aufweist.

Aufgrund des erfindungsgemäßen Werkzeugs ist es erstmals möglich, ein Zahnfragment, insbesondere eine Zahnwurzel und/oder ein Zahnwurzelrest, aus einem Zahnfach bzw. einer Alveole zu entfernen, ohne dass in einem vorgeschalteten operativen Schritt der Wurzelkanal gereinigt oder vergrößert oder eine Bohrung in das Zahnfragment eingebracht werden müsste. Aufgrund des Bohrabschnitts des erfindungsgemäßen Werkzeugs ist es möglich den Zahnwurzelkanal zu reinigen und/oder zu vergrößern oder eine Bohrung in das Zahnfragment einzubringen.

Sobald der Bohrabschnitt tief genug in den Zahnwurzelkanal oder das Zahnfragment vorgedrungen ist, wird automatisch der retentive Abschnitt des erfindungsgemäßen Werkzeugs in den Zahnwurzelkanal oder die Bohrung in dem Zahnfragment nachgeführt. Aufgrund des Verbringens des retentiven Abschnitts in den Zahnwurzelkanal oder die Bohrung in dem Zahnfragment wird durch die retentiven Elemente eine form- und/oder kraftschlüssige Verbindung zwischen dem erfindungsgemäßen Werkzeug, insbesondere dem retentiven Abschnitt, und dem Zahnfragment hergestellt. Folglich hat ein Entfernen des erfindungsgemäßen Werkzeugs zur Folge, dass auch das zu entfernende Zahnfragment aus der Alveole entfernt wird.

Somit ist es im Gegensatz zum Stand der Technik möglich, das in der Alveole verbliebene Zahnfragment, insbesondere die Zahnwurzel oder den Zahnwurzelrest, mittels lediglich eines einzigen Werkzeugs und lediglich eines einzigen operativen Schritts aus der Alveole zu entfernen.

An der Basis kann ein Antrieb in Form eines mechanischen oder eines manuellen bzw. händischen Antriebs angeordnet sein. Mechanische Antriebe können insbesondere elektrisch oder pneumatisch angetrieben sein.

Für die überwiegende Zahl von Anwendungen kann es vorteilhaft sein, wenn die Basis und die Nadel einteilig ausgebildet sind. Ein solches einteiliges medizinisches Werkzeug bzw. einteilige Nadel lässt sich besonders einfach steril aus einer Verpackung entnehmen und direkt verwenden.
Es kann aber auch vorteilhaft sein, wenn die Basis und die Nadel mehrteilig ausgebildet und miteinander verbindbar sind.
Die mehrteilige Ausgestaltung von Basis und Nadel weist den Vorteil auf, dass die Basis nach einer gründlichen Reinigung wiederverwendet werden kann. Die Nadel hingegen ist bevorzugt als Einmalgebrauchsteil ausgestaltet.
Es kann auch vorteilhaft sein, wenn die Nadel mehrteilig ausgebildet ist und insbesondere der retentive Abschnitt und der Bohrabschnitt jeweils ein einzelnes Element ausbilden, wobei die Einzelelemente der Nadel miteinander verbindbar sind.
Je nach Einsatzzweck können unterschiedliche retentive Abschnitte und/oder Bohrabschnitte zu einer erfindungsgemäßen Nadel zusammengesetzt werden. Dabei können je nach Einsatzgebiet die Bohr- und/oder retentiven Abschnitte unterschiedliche Längen und/oder Durchmesser aufweisen. Darüber hinaus kann der Bohrabschnitt je nach Einsatzzweck unterschiedliche Querschnitte sowie Bohrprofile aufweisen. Eine Auswahl anwendbarer Bohrprofile kann der DE 696 36 020 T2 entnommen werden.

Auch der retentive Abschnitt kann je nach Einsatzzweck unterschiedlich ausgestaltet sein, so können insbesondere die Anzahl und/oder die Länge der an dem retentiven Abschnitt angeordneten retentiven Elemente unterschiedlich ausgestaltet sein. Desweiteren ermöglicht ein mehrteiliger Aufbau der Nadel die vorhandenen Abschnitte der Nadel, insbesondere den retentiven Abschnitt und den Bohrabschnitt, aus unterschiedlichen Materialien zu fertigen.

Es kann vorteilhaft sein, wenn der retentive Abschnitt und der Bohrabschnitt einteilig ausgebildet sind.

Die einteilige Ausgestaltung des retentiven und des Bohrabschnitts ermöglicht es, die Abschnitte in einem einzigen Fertigungsverfahren herzustellen, was zu Kostenersparnis führen kann.

Es kann vorteilhaft sein, wenn der Bohrabschnitt an dem der Basis gegenüber liegenden Ende der Nadel angeordnet ist.

Mittels des Bohrabschnitts soll der Wurzelkanal gereinigt und/oder vergrößert oder eine Bohrung in ein Zahnfragment, insbesondere die Zahnwurzel oder den Zahnwurzelrest, eingebracht werden. Um dies zu gewährleisten, ist es vorteilhaft den Bohrabschnitt in Einsatzrichtung des erfindungsgemäßen Werkzeugs an der Spitze des erfindungsgemäßen Werkzeugs und somit an dem der Basis gegenüber liegenden Ende der Nadel anzuordnen.

Es kann vorteilhaft sein, wenn der Bohrabschnitt eine sich verjüngende Spitze aufweist.

Eine sich verjüngende Spitze an einem Ende, insbesondere dem Ende des Bohrabschnitts, welcher zuerst in das Zahnfragment, insbesondere die Zahnwurzel oder den Zahnwurzelrest, eingeführt werden soll, ermöglicht es, das erfindungsgemäße Werkzeug präziser und sicherer zu führen und das Ansetzen des Werkzeugs auf oder in dem Zahnfragment, insbesondere der Zahnwurzel oder dem Zahnwurzelrest, zu vereinfachen.

Es kann vorteilhaft sein, wenn der retentive Abschnitt zwischen der Basis und dem Bohrabschnitt angeordnet ist.

Der retentive Abschnitt dient dazu zwischen dem erfindungsgemäße Werkzeug und dem Zahnfragment, insbesondere der Zahnwurzel oder dem Zahnwurzelrest, eine form- und/oder kraftschlüssige Verbindung herzustellen indem das erfindungsgemäße Werkzeug mit dem Zahnfragment, insbesondere der Zahnwurzel oder dem Zahnwurzelrest, beispielsweise verkantet, verkeilet, verklemmt oder verhakt wird. Dies geschieht im Wesentlichen dadurch, dass der retentive Abschnitt in den Zahnwurzelkanal oder die durch den Bohrabschnitt erzeugte Bohrung eingeführt wird. Um dies zu ermöglichen, ist es sinnvoll den retentiven Abschnitt in Funktionsrichtung hinter dem Bohrabschnitt und folglich zwischen der Basis und dem Bohrabschnitt anzuordnen.

Es kann vorteilhaft sein, wenn zwischen dem retentiven Abschnitt und der Basis und/oder dem retentiven Abschnitt und dem Bohrabschnitt wenigstens ein Zwischenelement angeordnet ist.

Das Zwischenelement kann als selbstständiges Einzelteil ausgebildet sein, welches insbesondere mit der Basis und dem retentiven Abschnitt verbindbar ist. Das Zwischenelement kann einteilig mit dem retentiven Abschnitt und/oder der Basis ausgebildet sein. Insbesondere kann zwischen dem retentiven Abschnitt und dem Bohrabschnitt ein funktional neutrales, vorzugsweise kurzes, Zwischenelement vorgesehen sein.

Es kann zweckmäßig sein, wenn der Bohrabschnitt eine Länge aufweist, die kleiner ist als die Länge des retentiven Abschnitts. Möglicherweise vorteilhafte Ausgestaltungen sehen eine Länge von 12 bis 18 mm, bevorzugt 15 mm, für die Basis, 10 bis 15 mm, bevorzugt 13 mm, für das Zwischenelement, 5 bis 12 mm, bevorzugt 10 mm, für den retentiven Abschnitt und/oder 1 bis 3 mm, bevorzugt 1 bis 2 mm, für den Bohrabschnitt vor. Die Gesamtlänge des erfindungsgemäßen Werkzeugs überschreitet dabei vorteilhafterweise die Länge von 38 mm nicht.

Es kann vorteilhaft sein, wenn der retentive Abschnitt wenigstens ein retentives Element aufweist, wobei das retentive Element insbesondere als Widerhaken oder als eine Art archimedische Schraube oder nach Art eines Korkenziehers ausgebildet ist.

Um eine form- und/oder kraftschlüssige Verbindung zwischen dem retentiven Abschnitt und dem Zahnfragment, insbesondere der Zahnwurzel oder dem Zahnwurzelrest, herzustellen weist der retentive Abschnitt retentive Elemente auf, welche sich beim Verbringen des retentiven Abschnitts in den Zahnwurzelkanal oder in eine Bohrung verkanten, verkeilen, verklemmen, oder verhaken.

Es kann vorteilhaft sein, wenn der retentive Abschnitt oder wenigstens ein retentives Element aus einer Formgedächtnislegierung, insbesondere Nitinol, besteht.

Formgedächtnislegierungen oder Memory Metalle oder Formgedächtnismetalle sind spezielle Metalle, die in zwei unterschiedlichen Kristallstrukturen existieren können. Diese Metalle sind bekannt dafür, dass sie aus einer definierten Grundform verbogen werden können und unter definierten Transformationsbedingungen, wie beispielsweise Temperatur oder mechanische Spannung, "selbstständig" in die definierte Grundform zurückkehren.

Insbesondere bei der Transformationsbedingung Temperatur ist es möglich Formgedächtnislegierungen, insbesondere Nitinol, eine beliebige Temperatur vorzugeben, ab welcher das Nitinol in seine Grundform zurückkehrt. So kann es vorteilhaft sein, wenn die eine Formgedächtnislegierung, insbesondere Nitinol, umfassenden Abschnitte und/oder Elemente bei einer Temperatur, welche in einem Temperaturbereich zwischen 30 °C und 40 °C, bevorzugt 35 °C und 38 °C, besonders bevorzugt zwischen 36,3 °C und 37,4 °C, ganz besonders bevorzugt bei der normalen Körpertemperatur eines Menschen liegt, in eine Grundform zurückkehren.

Die Funktionsweise beruht prinzipiell darauf, dass einem Werkstück bei hohen Temperaturen eine Grundform "einprogrammiert" wird. Nachdem die Grundform einprogrammiert wurde, kann der Werkstoff bei Raumtemperatur weitestgehend beliebig verformt werden. Durch das Anlegen definierter Transformationsbedingungen reorganisiert sich die Kristallstruktur des Werkstückes und das Werkstück wird automatisch in seine einprogrammierte Grundform zurückverbracht.

Eine bekannte und für die Medizintechnik anwendbare Formgedächtnislegierung ist Nitinol, eine Nickel-Titan-Legierung.

Für den Einsatz in dem erfindungsgemäßen Werkzeug bedeutet dies, dass insbesondere Teile oder der gesamte retentive Abschnitt aus einer Formgedächtnislegierung, insbesondere Nitinol, gefertigt ist. Dabei entspricht die einprogrammierte Grundform der Formgedächtnislegierung einer Endstellung der retentiven Elemente des retentiven Abschnitts, in welcher das Zahnfragment, insbesondere die Zahnwurzel oder der Zahnwurzelrest, aus der Alveole entfernt werden soll. Für die retentiven Elemente, die als Widerhaken ausgebildet sind, bedeutet dies beispielsweise, dass die Grundform der Formgedächtnislegierung die Widerhaken in einer von der Längsachse der Nadel abgewinkelten bzw. abspreizenden Stellung beschreibt. Vor der einsatzgemäßen Verwendung des erfindungsgemäßen Werkzeugs werden die Widerhaken des retentiven Abschnitts in eine Ausgangsstellung verbracht, indem die Widerhaken derart verformt werden, dass diese zumindest weitestgehend flach an dem retentiven Abschnitt anliegen. Folglich wird der effektive Durchmesser des retentiven Abschnitts vor dem Verbringen des erfindungsgemäßen Werkzeugs in den Zahnwurzelkanal oder die Bohrung im Zahnfragment verringert. Dies ermöglicht ein einfacheres und schmerzfreies Verbringen des erfindungsgemäßen Werkzeugs, insbesondere des retentiven Abschnitts, in den Zahnwurzelkanal oder die Bohrung im Zahnfragment.
Nach Verbringen des retentiven Abschnitts in den Zahnwurzelkanal oder die Bohrung des Zahnfragments werden die definierten Transformationsbedingungen angelegt, die dazu führen, dass der retentive Abschnitt, insbesondere die retentiven Elemente sich selbstständig in ihre Endstellung bzw. in die Grundform der Formgedächtnislegierung zurückverbringen. Dies bedeutet bei der Ausgestaltung der retentiven Elemente als Widerhaken, dass sich diese ausgehend aus der Ausgangsstellung, in welcher die Widerhaken weitestgehend flach an dem retentiven Abschnitt anliegen, von dem retentiven Abschnitt abwinkeln bzw. abspreizen und somit eine form- und/oder kraftschlüssige Verbindung, insbesondere ein Verkanten, Verkeilen, Verklemmen oder Verhaken der retentiven Elemente mit der Wandung der Bohrung im Zahnfragment oder der Wandung des Zahnwurzelkanals, hervorgerufen wird. Dieses Verbringen der retentiven Elemente in ihre Endstellung bzw. in die Grundform der Formgedächtnislegierung bewirkt eine form- und/oder kraftschlüssige Verbindung des erfindungsgemäßen Werkzeugs, insbesondere des retentiven Abschnitts, mit dem Zahnfragment, insbesondere der Zahnwurzel oder dem Zahnwurzelrest. Nicht Teil der beanspruchten Erfindung ist ein Verfahren zur Extraktion von Zahnfragmenten, insbesondere Zahnwurzeln und/oder Zahnwurzelresten, aus einem Zahnfach bzw. einer Alveole im Kieferbereich mittels eines erfindungsgemäßen medizinischen Werkzeugs umfassend die Verfahrensschritte:
- Einbringen eines Bohrabschnitts in das Zahnfragment,
- Zumindest teilweises Einbringen eines retentiven Abschnitts in das Zahnfragment,
- Anlegen einer definierten Transformationsbedingung,
- Abwarten, bis das Werkzeug, insbesondere der retentive Abschnitt, eine Transformation aus einer Ausgangsstellung in eine Endstellung abgeschlossen hat,
- Entfernen des Werkzeugs mitsamt Zahnfragment aus der Alveole.

Vor der eigentlichen Extraktion eines Zahnfragments, insbesondere einer Zahnwurzel oder eines Zahnwurzelrestes, werden die Einzelteile, für den Fall, dass das medizinische Werkzeug aus mehreren Einzelteilen aufgebaut ist, zu einem erfindungsgemäßen medizinischen Werkzeug zusammengesetzt und miteinander verbunden. Anschließend wird der retentive Abschnitt, sollte er nicht bereits in einer Ausgangsstellung geliefert werden, in eine Ausgangsstellung verbracht. In dieser Ausgangsstellung sind die retentiven Elemente derart an dem retentiven Abschnitt angeordnet, dass der effektive Durchmesser des retentiven Abschnitts nicht vergrößert wird und der retentive Abschnitt insbesondere einen Durchmesser aufweist, der gleich oder kleiner dem Durchmesser des Bohrabschnitts ist.

Nachdem das erfindungsgemäße Werkzeug in die Ausgangsstellung verbracht wurde, wird das erfindungsgemäße Werkzeug auf dem Zahnfragment aufgesetzt und mittels eines Antriebs in Rotation versetzt. Dabei kann der Antrieb mittels eines elektrisch oder pneumatisch angetriebenen Antriebs oder einem manuellen bzw. händischen Antriebs erfolgen. Aufgrund der Rotation dringt der Bohrabschnitt in das Zahnfragment ein.

Sobald der Bohrabschnitt vollständig in das Zahnfragment eingedrungen ist, dringt auch der retentive Abschnitt des Werkzeugs zumindest teilweise in das Zahnfragment ein. Wenn der retentive Abschnitt vollständig oder weit genug in das Zahnfragment eingebracht wurde, werden definierte Transformationsbedingungen an das medizinische Werkzeug, insbesondere an den retentiven Abschnitt, angelegt, die dazu führen, dass das medizinische Werkzeug, insbesondere der retentive Abschnitt, eine Transformation von der Ausgangstellung in eine Endstellung bzw. eine Grundform der Formgedächtnislegierung vollführt.

Sobald die Transformation des medizinischen Werkzeugs, insbesondere des retentiven Abschnitts, abgeschlossen ist, ist das medizinische Werkzeug form-und/oder kraftschlüssig mit dem Zahnfragment verbunden und das medizinische Werkzeug kann zusammen mit dem Zahnfragment aus der Alveole entfernt werden.

Es kann vorteilhaft sein, wenn vor dem Einbringen des Bohrabschnitts in das Zahnfragment das Werkzeug, insbesondere der retentiven Abschnitt, in eine Ausgangsstellung verbracht wird.

Es kann vorteilhaft sein, wenn gleichzeitig mit dem Einbringen des Bohrabschnitts in das Zahnfragment, insbesondere in die Zahnwurzel oder den Zahnwurzelrest, ein Zahnwurzelkanal gereinigt oder eine Bohrung in das Zahnfragment eingebracht wird.

Weiterbildung und vorteilhafte Ausgestaltungen der Erfindung können sich auch aus der nachfolgenden Beschreibung eines Ausführungsbeispiels ergeben, das in der Zeichnung dargestellt ist. In dieser zeigen:
- Fig. 1: eine schematische Ansicht einer ersten Ausführungsform eines erfindungsgemäßen medizinischen Werkzeugs,
- Fig. 2: eine schematische Ansicht einer zweite Ausführungsform eines erfindungsgemäßen medizinischen Werkzeugs,
- Fig. 3: eine Ansicht einer zweiten Ausführungsform eines erfindungsgemäßen medizinischen Werkzeugs mit einem vergrößerten Detailbereich,
- Fig. 4: eine schematische Ansicht der ersten Ausführungsform eines erfindungsgemäßen medizinischen Werkzeugs in einer ersten mehrteilig aufgebauten Variante im nicht zusammengebauten Zustand,
- Fig. 5: eine schematische Ansicht der ersten Ausführungsform eines erfindungsgemäßen medizinischen Werkzeugs in einer zweiten mehrteilig aufgebauten Variante im nicht zusammengebauten Zustand,
- Fig. 6: eine schematische Ansicht der ersten Ausführungsform eines erfindungsgemäßen medizinischen Werkzeugs mit einer vorteilhaften Bemaßung der einzelnen Abschnitte,
- Fig. 7: eine Ansicht der zweiten Ausführungsform eines erfindungsgemäßen medizinischen Werkzeugs mit einer vorteilhaften Bemaßung der einzelnen Abschnitte.

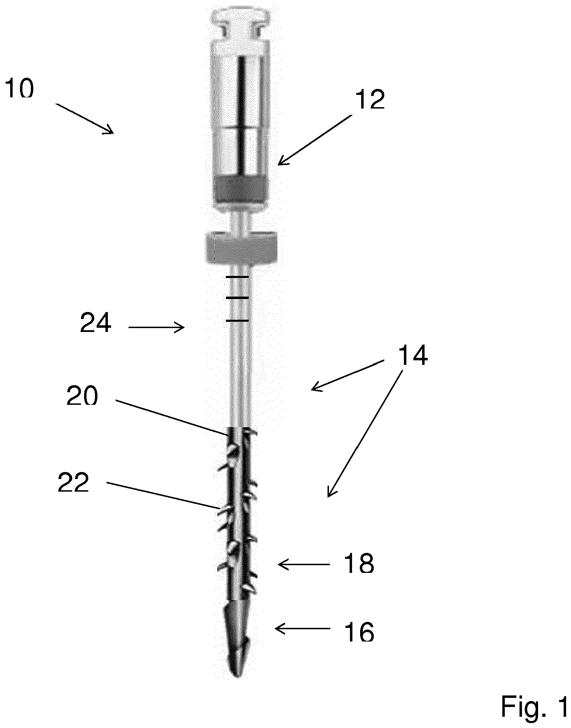

Fig. 1 zeigt eine schematische Zeichnung einer ersten Ausführungsform eines erfindungsgemäßen medizinischen Werkzeugs 10 umfassend eine Basis 12 und eine Nadel 14. Ein erstes Ende der Nadel 14 ist an der Basis 12 angeordnet und mit der Basis 12 verbunden. An dem Ende der Nadel 14, welches nicht mit der Basis 12 verbunden ist, ist ein Bohrabschnitt 16 angeordnet. Der Bohrabschnitt 16 läuft zum freien Ende der Nadel 14 spitz zu und weist auf seiner Oberfläche wenigstens eine Nut auf, wobei sich die Nut spiralförmig um den Bohrabschnitt 16 windet.

An den Bohrabschnitt 16 anschließend und zwischen dem Bohrabschnitt 16 und der Basis 12 gelegen ist ein retentiver Abschnitt 18 angeordnet. Der retentive Abschnitt 18 weist in seinem Basiselement 20 einen Durchmesser auf, der dem Durchmesser des Bohrabschnitts 16 zumindest weitestgehend entspricht. An dem Basiselement 20 des retentiven Abschnitts 18 sind retentive Elemente 22 in Form von Widerhaken angeordnet. Die retentiven Elemente 22 sind stoffschlüssig mit der Basis 20 des retentiven Abschnitts 18 verbunden. Dabei weisen die freien Enden der retentiven Elemente 22 in Richtung des Bohrabschnitts 16.

Des Weiteren ist in der Fig. 1 der retentive Abschnitt 18 in einer Endstellung bzw. einer Grundform der Formgedächtnislegierung dargestellt. In dieser Endstellung bzw. einer Grundform der Formgedächtnislegierung befinden sich die retentiven Elemente 20 in einem von dem Basiselement 20 abgewinkelten bzw. abgespreizten Zustand. Folglich weist der retentive Abschnitt 18 in dieser Endstellung bzw. einer Grundform der Formgedächtnislegierung einen Durchmesser auf, der größer ist, als der Durchmesser des Bohrabschnitts 16.

Zwischen dem retentiven Abschnitt 18 und der Basis 12 ist in der gezeigten Ausführungsform ein Zwischenelement 24 angeordnet.

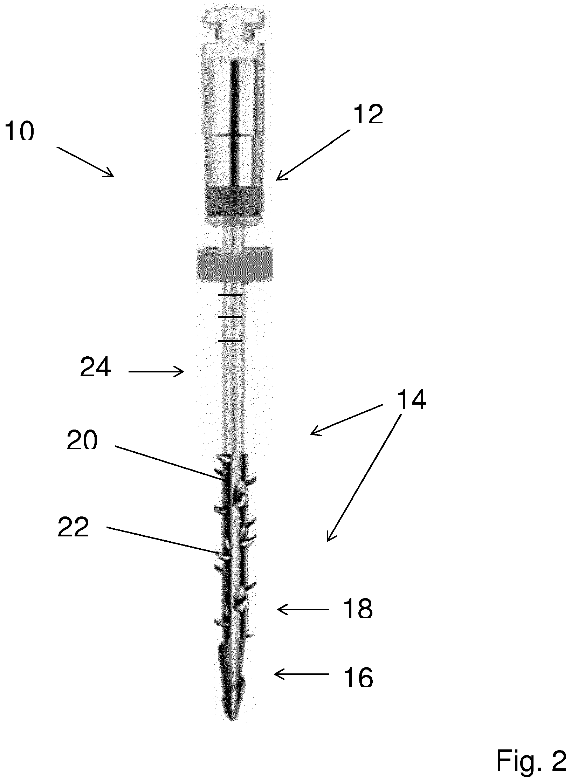

Fig. 2 zeigt eine schematische Ansicht einer zweiten Ausführungsform eines erfindungsgemäßen medizinischen Werkzeugs 10. Die zweite Ausführungsform unterscheidet sich von der ersten Ausführungsform dadurch, dass die freien Enden der retentiven Elemente 22 in Richtung der Basis 12 weisen. Die übrigen Ausführungen bezüglich der ersten Ausführungsform gemäß Fig. 1 können auf die zweite Ausführungsform entsprechend übernommen werden.

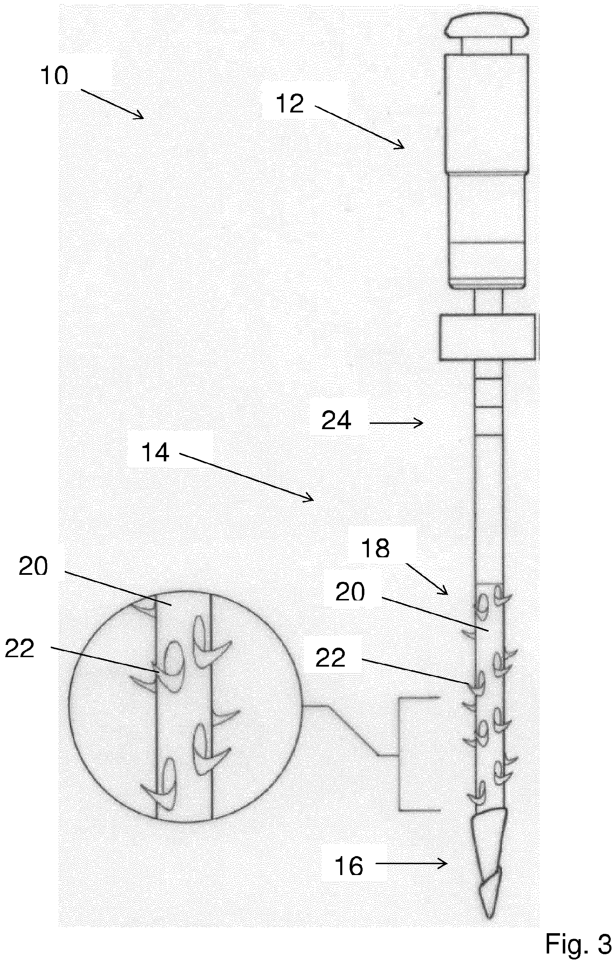

Fig. 3 zeigt eine Ansicht einer zweiten Ausführungsform eines erfindungsgemäßen medizinischen Werkzeugs 10, wobei ein Bereich des retentiven Abschnitts 18 in einem vergrößerten Detailbereich dargestellt ist. In dem Detailbereich ist die Ausgestaltung der retentiven Elemente 22 als Widerhaken gut ersichtlich. Die retentiven Elemente 22 sind dabei an dem dem Bohrabschnitt 16 zugewandten Ende einer zumindest weitestgehend ovalen Vertiefung angeordnet. Entsprechend weist das freie Ende der retentiven Elemente 22 in Richtung der Basis 12. Zudem ist das retentive Element 22 an seinem mit der Vertiefung verbundenen Ende breiter als an dem freien Ende ausgebildet und läuft hin zum freien Ende spitz zu.

Im Übrigen können die Ausführungen bezüglich der zweiten Ausführungsform gem. Fig. 2 entsprechend übernommen werden.

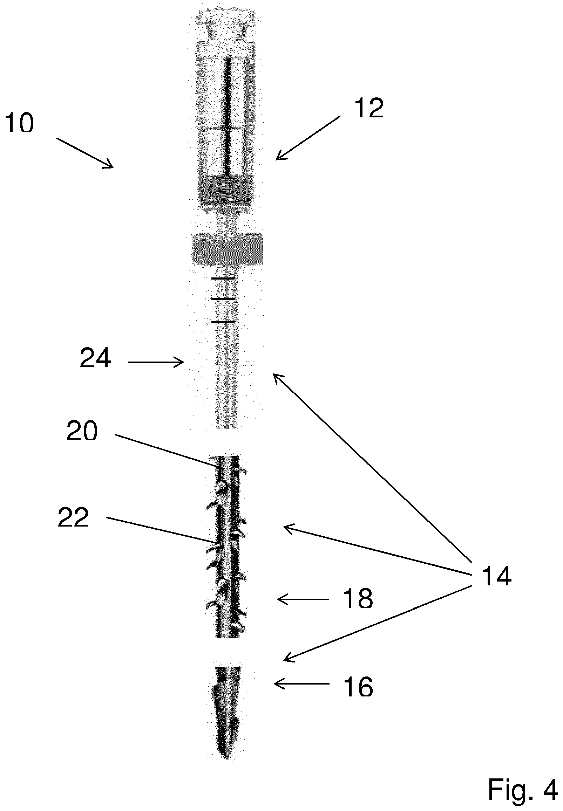

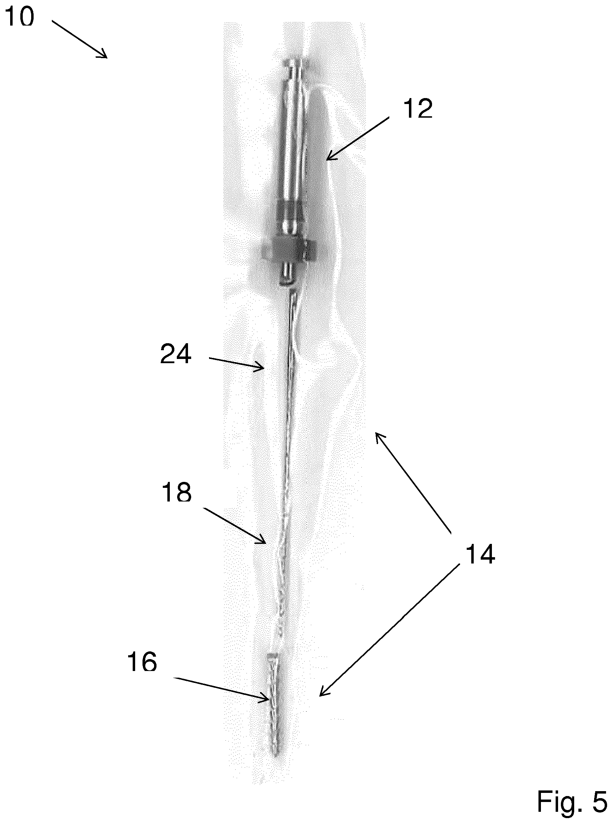

Die Fig. 4 und 5 zeigen anhand des ersten Ausführungsbeispiels zwei mögliche Ausgestaltungen für einen mehrteiligen Aufbau des erfindungsgemäßen medizinischen Werkzeugs 10 und können entsprechend auch auf die zweite Ausführungsform angewandt werden.

Fig. 4 zeigt eine schematische Ansicht der ersten Ausführungsform eines erfindungsgemäßen medizinischen Werkzeugs 10 in einer ersten mehrteilig aufgebauten Variante im nicht zusammengebauten Zustand. In der gezeigten Darstellung ist das erfindungsgemäße medizinische Werkzeug 10 in drei miteinander verbindbaren Einzelteilen gezeigt.

In der gezeigten Variante ist das Zwischenelement 24 fest mit der Basis 12 des erfindungsgemäßen Werkzeugs 10 verbunden. Der retentive Abschnitt 18 und der Bohrabschnitt 16 sind jeweils einteilig ausgebildet und miteinander verbindbar. Dabei ist der retentive Abschnitt 18 derart mit dem Zwischenelement 24 verbindbar, dass die freien Enden der retentiven Elemente in Richtung des Bohrabschnitts 16 weisen. Der Bohrabschnitt 16 ist mit dem retentiven Abschnitt 18 derart verbindbar, dass das spitz zulaufende Ende des Bohrabschnitts 16 von der Basis 12 weg weist.

Bezüglich des weiteren Aufbaus des erfindungsgemäßen Werkzeugs 10 sei auf die Ausführung zu Fig. 1 verwiesen.

Fig. 5 zeigt eine schematische Ansicht der ersten Ausführungsform eines erfindungsgemäßen medizinischen Werkzeugs 10 in einer zweiten mehrteilig aufgebauten Variante im nicht zusammengebauten Zustand. In der gezeigten Darstellung ist das erfindungsgemäße medizinische Werkzeug 10 in drei miteinander verbindbaren Einzelteilen gezeigt.

Das erfindungsgemäße Werkzeug 10 umfasst eine Basis 12 und eine Nadel 14, wobei die Nadel 14 in diesem Ausführungsbeispiel aus einem Bohrabschnitt 16, einem retentiven Abschnitt 18 und einem Zwischenelement 24 besteht. Des Weiteren sind der retentive Abschnitt 18 und das Zwischenelement 24 einteilig ausgebildet.

Das Zwischenelement 24 ist mit der Basis 12 und der Bohrabschnitt 16 ist mit dem retentiven Abschnitt 18 verbindbar.

Der Bohrabschnitt 16 läuft zum freien Ende der Nadel 14 spitz zu und weist auf seiner Oberfläche wenigstens eine Nut auf, wobei sich die Nut spiralförmig um den Bohrabschnitt 16 windet.

Bezüglich des weiteren Aufbaus des erfindungsgemäßen Werkzeugs 10 sei auf die Ausführung zu Fig. 1 verwiesen.

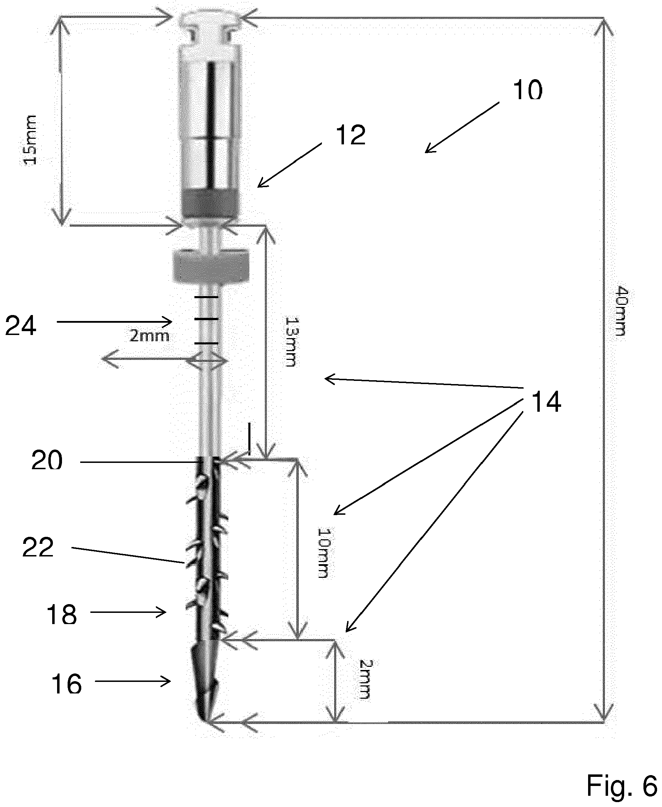

Die Fig. 6 zeigt eine schematische Ansicht der ersten Ausführungsform eines erfindungsgemäßen medizinischen Werkzeugs 10 mit einer vorteilhaften Bemaßung der einzelnen Abschnitte.

Das erfindungsgemäße Werkzeug weist eine Gesamtlänge vom freien Ende der Basis 12 zu dem freien Ende des Bohrabschnitts 16 von 40 mm auf. Die Gesamtlänge ergibt sich bei der gezeigten Ausführungsform aus einer 15 mm langen Basis 12, einem 13 mm langen Zwischenelement 24, einem 10 mm langen retentiven Abschnitt 18 und einem 2 mm langen Bohrabschnitt 16. Der Durchmesser des Bohrabschnitts 16 beträgt an seiner breitesten Stelle 2 mm und verjüngt sich zum freien Ende des Bohrabschnitts 16. Das Basiselement 20 weist ebenfalls einen Durchmesser von 2 mm auf. Aufgrund der in der Grundform abgespreizten retentiven Elemente 22 weist der retentive Abschnitt 18 in der Grundform einen Durchmesser größer 2 mm auf.

Die genannte Bemaßung stellt die Ausdehnung der einzelnen Abschnitte für einen einteilig ausgebildete Ausführungsform oder eine mehrteilig ausgebildete Ausführungsform im zusammengebauten Zustand dar. Bei einem mehrteiligen Aufbau des erfindungsgemäßen Werkzeugs 10, wie in den Fig. 4 und 5 dargestellt, können die Einzelteile, bspw. aufgrund von vorhandenen Verbindungsbereichen, länger ausgebildet sein.

Bezüglich des weiteren Aufbaus des erfindungsgemäßen Werkzeugs 10 sei auf die Ausführung zu Fig. 1 verwiesen.

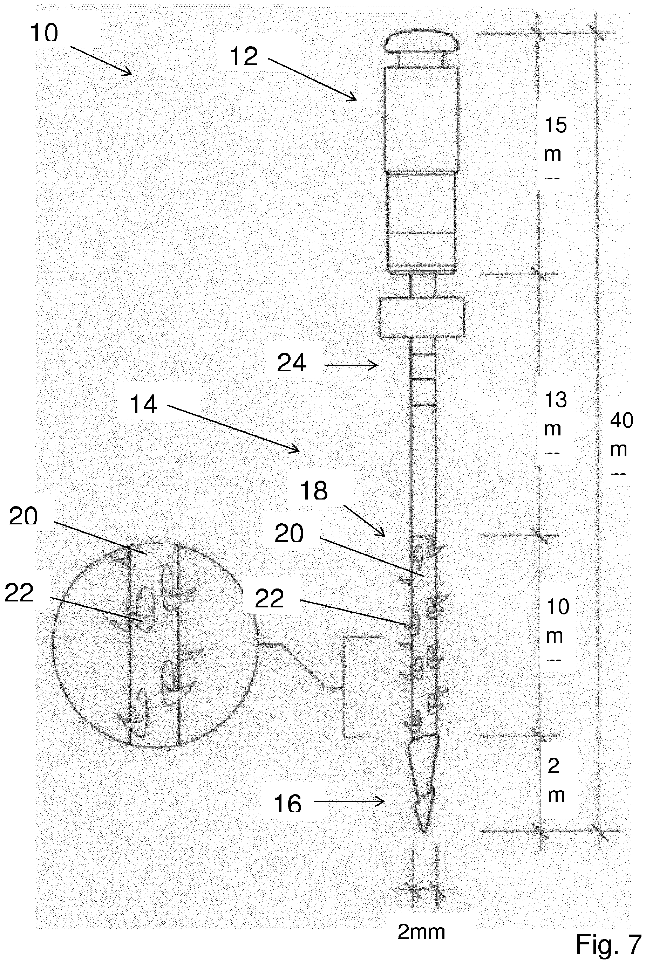

Die Fig. 7 zeigt eine Ansicht der zweiten Ausführungsform eines erfindungsgemäßen medizinischen Werkzeugs 10 mit einer vorteilhaften Bemaßung der einzelnen Abschnitte.

Das erfindungsgemäße Werkzeug weist eine Gesamtlänge vom freien Ende der Basis 12 zu dem freien Ende des Bohrabschnitts 16 von 40 mm auf. Die Gesamtlänge ergibt sich bei der gezeigten Ausführungsform aus einer 15 mm langen Basis 12, einem 13 mm langen Zwischenelement 24, einem 10 mm langen retentiven Abschnitt 18 und einem 2 mm langen Bohrabschnitt 16. Der Durchmesser des Bohrabschnitts 16 beträgt an seiner breitesten Stelle 2 mm und verjüngt sich zum freien Ende des Bohrabschnitts 16. Das Basiselement 20 weist ebenfalls einen Durchmesser von 2 mm auf. Aufgrund der in der Grundform abgespreizten retentiven Elemente 22 weist der retentive Abschnitt 18 in der Grundform einen Durchmesser größer 2 mm auf.

Die genannte Bemaßung stellt die Ausdehnung der einzelnen Abschnitte für einen einteilig ausgebildete Ausführungsform oder eine mehrteilig ausgebildete Ausführungsform im zusammengebauten Zustand dar. Bei einem mehrteiligen Aufbau des erfindungsgemäßen Werkzeugs 10, wie in den Fig. 4 und 5 dargestellt, können die Einzelteile, bspw. aufgrund von vorhandenen Verbindungsbereichen, länger ausgebildet sein.

Bezüglich des weiteren Aufbaus des erfindungsgemäßen Werkzeugs 10 sei auf die Ausführung zu Fig. 2 und 3 verwiesen.

### Bezugszeichenliste

### (ist Teil der Beschreibung)

- 10: Werkzeug
- 12: Basis
- 14: Nadel
- 16: Bohrabschnitt
- 18: retentiver Abschnitt
- 20: Basiselement
- 22: retentives Element
- 24: Zwischenelement

## Patentansprüche

1. Medizinisches Werkzeug (10) zum Entfernen von Zahnfragmenten, insbesondere Zahnwurzeln und/oder Zahnwurzelresten, aus einem Zahnfach bzw. einer Alveole im Kieferbereich, umfassend eine Basis (12) sowie eine an der Basis (12) angeordnete Nadel (14), **dadurch gekennzeichnet, dass** die Nadel (14) einteilig ausgebildet ist und einen retentiven Abschnitt (18) und einen Bohrabschnitt (16) aufweist, wobei der retentive Abschnitt (18) wenigstens ein retentives Element (22) aufweist, wobei das retentive Element (22) als Widerhaken ausgebildet ist.

2. Medizinisches Werkzeug (10) nach Anspruch 1, **dadurch gekennzeichnet, dass** die Basis (12) und die Nadel (14) einteilig ausgebildet sind.

3. Medizinisches Werkzeug (10) nach Anspruch 1, **dadurch gekennzeichnet, dass** die Basis (12) und die Nadel (14) mehrteilig ausgebildet und miteinander verbindbar sind,

4. Medizinisches Werkzeug (10) nach zumindest einem der vorhergehenden Ansprüche, **dadurch gekennzeichnet, dass** der Bohrabschnitt (16) an dem der Basis (12) gegenüberliegenden Ende der Nadel (14) angeordnet ist.

5. Medizinisches Werkzeug (10) nach zumindest einem der vorhergehenden Ansprüche, **dadurch gekennzeichnet, dass** der Bohrabschnitt (16) eine sich verjüngende Spitze aufweist.

6. Medizinisches Werkzeug (10) nach zumindest einem der vorhergehenden Ansprüche, **dadurch gekennzeichnet, dass** der retentive Abschnitt (18) zwischen der Basis (12) und dem Bohrabschnitt (16) angeordnet ist.

7. Medizinisches Werkzeug (10) nach zumindest einem der vorhergehenden Ansprüche, **dadurch gekennzeichnet, dass** zwischen dem retentiven Abschnitt (18) und der Basis (12) und/oder dem retentiven Abschnitt (18) und dem Bohrabschnitt (16) wenigstens ein Zwischenelement (24) angeordnet ist.

8. Medizinisches Werkzeug (10) nach zumindest einem der vorhergehenden Ansprüche, **dadurch gekennzeichnet, dass** der retentive Abschnitt (18) oder wenigstens ein retentives Element (22) aus einer Formgedächtnislegierung, insbesondere Nitinol, besteht.

9. Medizinisches Werkzeug (10) nach zumindest einem der vorhergehenden Ansprüche, **dadurch gekennzeichnet, dass** der Bohrabschnitt (16) eine Länge aufweist, die kleiner ist als die Länge des retentiven Abschnitts (18).

## Claims

1. A medical tool (10) for removing tooth fragments, in particular tooth roots and/or tooth root remnants, from a tooth socket or an alveolus in the jaw region, comprising a base (12) and a needle (14) which is arranged on the base (12), **characterised in that** the needle (14) is formed in one piece and has a retentive section (18) and a drill section (16), wherein the retentive section (18) has at least one retentive element (22), wherein the retentive element (22) is formed as barbed hooks.

2. The medical tool (10) according to Claim 1, **characterised in that** the base (12) and the needle (14) are formed in one piece.

3. The medical tool (10) according to Claim 1, **characterised in that** the base (12) and the needle (14) are formed in multiple pieces and can be connected to one other.

4. The medical tool (10) according to at least one of the preceding claims, **characterised in that** the drill section (16) is arranged at the end of the needle (14) which is opposite the base (12).

5. The medical tool (10) according to at least one of the preceding claims, **characterised in that** the drill section (16) has a tapered tip.

6. The medical tool (10) according to at least one of the preceding claims, **characterised in that** the retentive section (18) is arranged between the base (12) and the drill section (16).

7. The medical tool (10) according to at least one of the preceding claims, **characterised in that** at least one intermediate element (24) is arranged between the retentive section (18) and the base (12) and/or the retentive section (18) and the drill section (16).

8. The medical tool (10) according to at least one of the preceding claims, **characterised in that** the retentive section (18) or at least one retentive element (22) consists of a shape-memory alloy, in particular nitinol.

9. The medical tool (10) according to at least one of the preceding claims, **characterised in that** the drill section (16) has a length which is smaller than the length of the retentive section (18).

## Revendications

1. Instrument médical (10) servant à retirer des fragments dentaires, notamment des racines dentaires et/ou des restes de racines dentaires d'une alvéole dans la zone d'une mâchoire, l'instrument comprenant une base (12), ainsi qu'une aiguille (14) disposée sur la base (12), **caractérisé en ce que** l'aiguille (14) est réalisée d'un seul tenant et présente une partie rétentive (18) et une partie foreuse (16), la partie rétentive (18) présentant au moins un élément rétentif (22), l'élément rétentif (22) étant conçu comme ergot.

2. Instrument médical (10) suivant la revendication 1, **caractérisé en ce que** la base (12) et l'aiguille (14) sont conçues en une seule pièce.

3. Instrument médical (10) suivant la revendication 1, **caractérisé en ce que** la base (12) et l'aiguille (14) sont conçues en plusieurs pièces et peuvent être reliées entre elles.

4. Instrument médical (10) suivant au moins une des revendications précédentes, **caractérisé en ce que** la partie foreuse (16) est disposée sur l'extrémité opposée à la base (12) de l'aiguille (14).

5. Instrument médical (10) suivant au moins une des revendications précédentes, **caractérisé en ce que** la partie foreuse (16) présente une pointe effilée.

6. Instrument médical (10) suivant au moins une des revendications précédentes, **caractérisé en ce que** la partie rétentive (18) est disposée entre la base (12) et la partie foreuse (16).

7. Instrument médical (10) suivant au moins une des revendications précédentes, **caractérisé en ce qu'**au moins un élément intermédiaire (24) est disposé entre la partie rétentive (18) et la base (12) et/ou entre la partie rétentive (18) et la partie foreuse (16).

8. Instrument médical (10) suivant au moins une des revendications précédentes, **caractérisé en ce que** la partie rétentive (18) ou au moins un élément rétentif (22) est constitué d'un alliage à mémoire de forme, notamment de nitinol.

9. Instrument médical (10) suivant au moins une des revendications précédentes, **caractérisé en ce que** la partie foreuse (16) présente une longueur qui est inférieure à la longueur de la partie rétentive (18).
